# EUROPEAN PATENT SPECIFICATION

(11) **EP 1 512 764 B1**
(45) Date of publication and mention of the grant of the patent: **19.03.2008**
(21) Application number: 04027642.0
(22) Date of filing: 05.09.2002
(51) Int. Cl.: C22B 9/16, C22B 7/00, F27D 3/00

(54) **Molten metal pump and furnace for use therewith**
Metallschmelzepumpe und Ofen
Pompe à métal liquide et four utilisant cette pompe

(30) Priority: 07.09.2001 US 948423
(43) Date of publication of application: 09.03.2005
(62) Divisional of application: 02798146.3
(73) Proprietor: Areaux, Larry, Punta Gorda FL 33955-4683 (US)
(72) Inventor: Areaux, Larry, Punta Gorda FL 33955-4683 (US)
(74) Representative: Hanson, William Bennett

(56) References cited:
- WO-A-99/53109
- US-A- 4 191 563
- US-A- 4 696 458
- DATABASE COMPENDEX [Online] ENGINEERING INFORMATION, INC., NEW YORK, NY, US; AREAUX LARRY D ET AL: "Vortex charge well with gas lift pump and gravity furnace charger" XP009042310 Database accession no. E2000054950346 & LIGHT MET (WARRENDALE PA); LIGHT METALS: PROCEEDINGS OF SESSIONS, TMS ANNUAL MEETING (WARRENDALE, PENNSYLVANIA) 1999 MINERALS, METALS & MATERIALS SOC (TMS), WARRENDALE, PA, USA, 1999, pages 999-1004,
- DATABASE COMPENDEX [Online] ENGINEERING INFORMATION, INC., NEW YORK, NY, US; AREAUX LARRY D ET AL: "Submerge melt technique for aluminum scrap" XP009042311 Database accession no. EIX92101335263 & LIGHT MET 92; LIGHT METALS 1992 1991 PUBL BY MINERALS, METALS & MATERIALS SOC (TMS), WARRENDALE, PA, USA, 1991, pages 877-879,

## Description

The present invention relates to metallurgical processes and apparatus, and more particularly to metallurgical processes and apparatus in which metal chips are melted in a molten metal vortex, which is fed by an inert gas, bubble-actuated molten metal pump.

My following U. S. patents disclose various apparatus and processes related to the introduction of metal chips into the charge-well of a metal melting furnace and the conveyance of molten metal from one place to another within or out of a metal melting furnace.

U. S. Patent No. 4,710,126 discloses a process for producing dry metal chips. This process includes the steps of entraining fluid-containing metal chips in a gas, introducing the gas into a cyclone separator having an internal wall heated to fluid-vaporizing temperature by combustion in a surrounding chamber, purging and vaporizing fluid from said chips, exhausting hot gases and exiting dried metal chips from said separator, conducting hot gaseous products of combustion from the combustion chamber to a continuous centrifuge, extracting extractable fluid from starting metal chips in the centrifuge, entraining the chips in the hot gaseous products of combustion introduced into the centrifuge, and conducting the gaseous products with entrained chips from the continuous centrifuge to the cyclone separator, thereby providing an essentially closed system. The combustion chamber may be a part of an afterburner furnace and hot gases entraining vaporized oil exhausted from the cyclone separator may be recycled and employed as fuel for the combustion chamber.

U. S. Patent No. 4,721,457 discloses a process for producing dried and cleaned metal chips by entraining metal chips in a gas, introducing the gas into a cyclone separator having a wall heated to fluid-vaporizing temperature by combustion effected in a surrounding chamber, purging fluid from said chips, exhausting hot gases and exiting dried metal chips form said separator, conducting hot gaseous products of combustion from the combustion chamber to a continuous centrifuge, extracting extractable fluid from starting metal chips, which may be previously uncleaned and/or unwashed, in the centrifuge, entraining the chips in the hot gaseous products of combustion introduced into the centrifuge, and conducting the gaseous products with entrained chips from the continuous centrifuge to the cyclone separator, thereby providing an essentially closed system. The combustion chamber may be a part of an afterburner furnace and hot gases entraining vaporized oil exhausted from the cyclone separator may be recycled and employed as fuel for the combustion chamber. Provision is made in the system for hot water and/or steam from either an external source of from a water jacket around the cyclone separator, preferably together with solvent and/ or detergent, and a final chip drying step wherein the drying is effected using products of combustion which are enroute back to the continuous centrifuge.

U. S. Patent No. 4,872,907 discloses an apparatus and method for charging metal chips into a molten bath of the metal from which the chips are formed, comprising a compacting extruded and a delivery conduit which is resistant to the mass of molten metal and which is pivotable to dip into the molten metal bath when chips are being charged thereinto and out of contact with the bath when charging is to be discontinued, are disclosed. The chips are forced through the delivery conduit in the form of a compacted or densified mass preferably having a density between about 30 and 60 percent of the density of the solid metal and preferably between about 55 and 80 pounds per cubic foot. Feed is continued while the delivery conduit is in the molten metal bath and until it is removed therefrom to prevent entry of molten metal into the delivery conduit. The method is preferably conducted on a continuous basis and various sensors with appropriate wiring may be employed for safety and for making the method substantially automatic in operation.

U. S. Patent No. 5,203,910 discloses a method for the conveyance of molten metal from one place to another, in a high-temperature molten metal pool in a metal-melting furnace or out of said molten metal pool, employing an at least partially-inclined elongated conveying conduit and gas feed means for feeding inert gas into the lower end of the conveying conduit and thereby inducing a flow of molten metal in and through said conveying conduit, is disclosed, along with suitable apparatus for carrying out the said method wherein the parts or elements coming into contact with the high-temperature molten metal pool are of a suitable refractory material.

U. S. Patent No. 5,211,744 discloses a process for utilization of metal chips, especially scrap metal chips, particularly brass and aluminum, by introduction of the metal chips into a pool of molten metal of which they are formed or an alloy thereof. The process allows for minimization of fuel cost, heat loss, and minimal conversion of the metal at the surface of the molten metal pool to metal oxide, as well as an increase in the yield of utilizable metal from the remelting or recycling operation, by maintaining a non-oxidizing atmosphere at the surface of the molten metal pool and optionally utilizing vaporized residual impurities from chips being recycled such as oil, lacquer, or similar vaporizable impurity to assist in maintaining the non-oxidizing atmosphere. Elimination of impurity-removal steps previously required for preparation of the chips for recycling by introduction into such a molten metal pool is eliminated. Environmental pollution is also conveniently and simultaneously substantially reduced from vaporizable contaminants, fumes, and decomposition products of combustion thereof.

U. S. Patent No. 5,395, 424 discloses a method for the conveyance of molten metal from one place to another, in a high-temperature molten metal pool in a metal-melting furnace or out of said molten metal pool employing at least a partially-inclined elongated conveying conduit and gas feed means for feeding inert gas into the lower end of the conveying conduit is employed. A flow of molten metal in and through said conveying conduit, is disclosed, along with suitable apparatus for carrying out the said method wherein the parts or elements coming into contact with the high-temperature molten metal pool are of a suitable refractory material. According to the present invention, an intermittent or pulsating inert gas feed is employed to produce essentially spherical or cylindrical bubbles within the conveying conduit, thereby resulting in greater efficiency and economy because of the possibility of reducing the quantity of inert gas employed to induce the flow of an identical amount of molten metal.

U. S. Patent No. 5,407,462 discloses a mass flow gravity feed furnace charger comprises a vertically-oriented elongated hollow conduit which is associated with an apertured heat-resistant charge-well cover adapted to lie essentially in contact with the upper surface of a molten metal pool in the charge well of a metal-melting furnace. Presized scrap metal charged into the conduit collects atop the surface of the molten metal pool, since the bottom opening of the conduit communicates with the charge-well cover aperture and permits the metal scrap to fall by gravity directly into the molten metal in the charge well. When the weight of the metal scrap column is sufficient to offset the resistance of the upper surface of the molten metal pool, the weight of the collected metal scrap gravitationally forces it into the molten metal mass it melts and is assimilated.

Employment of the method and charge of the invention enables the controlled introduction of metal scrap by mass flow and gravity feed directly into and beneath the surface of the pool of molten metal and obviates numerous disadvantages and inconveniences of past practices.

U. S. Patent No. 5,468,280 discloses a method for the conveyance of molten metal from one place to another in a high-temperature molten metal pool in a metal-melting furnace or out of said molten metal pool. At least partially-inclined elongated conveying conduit and gas feed means for feeding inert gas into the lower end of the conveying conduit is employed. A flow of molten metal is thereby inducted in and through said conveying conduit, is disclosed, along with suitable apparatus for carrying out the said method wherein the parts or elements coming into contact with the high-temperature molten metal pool are of a suitable refractory material. The inert gas is fed into the conveying conduit at a supersonic velocity, thereby simultaneously effecting a degassing of the molten metal while it is being conveyed.

U. S. Patent No. 5,735,935 discloses an inert gas bubble-actuated molten metal pump which is located in a metal-melting furnace to effect circulation of molten metal throughout the furnace. The inert gas employed to actuate the molten metal pump is captured beneath a heat-resistant and flame-resistant cover located above the exit port of the pump and over a substantial portion of the molten metal to thereby to prevent splashing, spattering and disruption of a thin protective layer or skin of oxidized metal at the surface of the molten metal as well as to provide a non-oxidizing atmosphere at the surface of the molten metal beneath said cover. In this manner the inert gas is employed efficiently and economically.

U. S. Patent No. 5,853,454 discloses a mass flow gravity feed furnace charger apparatus includes a charge-well cover having an aperture and an essentially vertical conduit for forming a substantially vertically-oriented column of metal chips or scrap within and above the aperture, and structure for bringing both the cover and conduit into position above a charge-well. The conduit is rapidly movable up and down to force the metal chips or scrap into molten metal in the charge-well even when the dross level at the surface of the molten metal is considerable, so that the apparatus and corresponding methods permit charging when gravity feed alone is not sufficient or sufficiently rapid. In a preferred embodiment, the conduit has an interior surface provided with gripping means to assist with the downward movement of metal chips or scrap into the molten metal in the charge well when the up and down motion of the conduit is in effect.

U. S. Patent No. 5,919, 283 discloses an inert gas bubble-actuated molten metal pump is located between one section of a metal-melting furnace and a second section to pump molten metal form the one section, wherein the molten metal is at a higher temperature, into the second section, wherein the molten metal is at a lower temperature, and its effluent is directed into contact with metal chips being charged into the second section, thereby assisting in the more rapid melting of the chips into the molten metal mass in the second section. The inert gas employed to actuate the molten metal pump is captured beneath a heat-resistant and flame-resistant cover located above the exit port of the pump and over a substantial portion of the molten metal mass in the second section, thereby providing a non-oxidizing atmosphere at the surface of the molten metal mass or pool beneath said cover. In this manner the inert gas is employed not only to actuate the inert gas bubble-actuated molten metal pump, but also to assist in the rapid melting of metal chips being charged, as well as to provide a non-oxidizing atmosphere at the surface of the molten metal.

U. S. Patent No. 5,984,999 discloses an arrangement in which the vortex well of a metal melting furnace is provided with an internal cavity having a circular cross section when viewed from the top, preferably a cavity of cylindrical or conical configuration, and with a peripheral exit port located tangentially with respect to said cavity at a lower level thereof for exit of molten metal into the main chamber of the furnace. An inert gas bubble-actuated molten metal pump brings molten metal from a hotter section of the furnace, advantageously directly form the main chamber, and has its exit port located tangentially to the periphery of the cavity at an upper level thereof, thereby creating vortical flow of molten metal therein and for circulation of hotter molten metal throughout the furnace. A head of molten metal can be created in the vortex well, which advantageously has an exit port of restricted internal cross-sectional area, to assist with attainment of these objectives.

A heat and flame-resistant cover may be located above the cavity and advantageously has an aperture therein for the loading of metal chips or scrap thereinto. A gravity-feed chip charger may surmount the aperture for the discharge of new metal chips or scrap into the cavity through the said aperture.

U. S. Patent No. 6,068,812 discloses an inert gas bubble-actuated molten metal pump, for the movement of molten metal in a molten-metal bath, which obviates the necessity of a heatproof and flameproof cover to counteract splashing and spattering at the surface of the molten metal bath above the pump, comprising an inert gas diffusion means at an upper end thereof, the diffusion means having an upper surface containing a multiplicity of small upwardly-opening apertures for the breaking up of large bubbles and the diffusion of small bubbles of inert gas upwardly therethrough. The pump includes a refractory block which comprises a conveying conduit which is preferably elongated in width and a spreader cavity in communication with both a passageway in the block for providing a source of inert gas and a lower end of the conveying conduit.

The purpose for creating a vortex in the vortex well is to rapidly submerge the small particles of metal whose mass would otherwise prevent the particles from penetrating the surface tension of the molten metal bath, thus causing a substantial increase in the percentage of metal loss due to oxidation. It has, however, has been determined that further steps must be taken to reduce oxidation, particularly when relatively more expensive metals such as aluminum are being used.

It is an object of the present invention to provide a means for further reducing metal losses due to oxidation in the vortex molten bath.

It is another object of the present invention to provide a way of integrating the functions of circulating molten metal and submerging metal chips in molten metal vortex to allow for rapid recovery of any temperature drop which may result from the introduction of the cold scrap.

It is still another object of the present invention to provide a means for efficiently burning off volatile hydrocarbons which may be present with metal chips that are being melted.

These and other objects are attained by the present invention which is a metal melting closed furnace which includes a main chamber, a circulation well connected to the main chamber by a communications passageway and a vortex well having an exit outlet for molten metal into the main chamber. A cover or other suitable containment means is emplaced above the vortex well. An inert gas activated molten metal pump is provided in which there is an entry port in the circulation well and exit port tangentially arranged with respect to the periphery of the cavity. This exit port will typically be at or near the top of the vortex well.

In order to reduce oxidation, inert gas bubbles are captured from this molten metal pump and are transported to an inert gas atmosphere or blanket above the molten metal vortex so that this inert gas atmosphere is continuously or intermittently replenished.

Also encompassed by the present invention is a process for melting metal in a furnace in which molten metal is heated in a main chamber and then circulated to a circulation well. The molten metal is then removed from the circulation well by an inert gas bubble actuated pump to the vortex well. An inert gas atmosphere is formed below the cover and is continuously or intermittently replenished by gas from the bubbles in the pump.

Also encompassed by the present invention is a metal-melting furnace which includes a main chamber and a circulation well connected to the main chamber by a communication passageway. There is also a vortex well having periphery, a top and an exit outlet for recovering molten metal therefrom, and a cover is emplaced over the vortex well. The furnace also includes an inert gas bubble actuated molten metal pump having an entry port in the circulation well and an exit port tangentially arranged with respect to the periphery of said vortex well at or near the top of the vortex well, wherein the exit port is positioned at a vertical position which is higher than the entry port. There is also an inert gas atmosphere positioned in the vortex well beneath the cover.

Also encompassed by the present invention is a metal-melting furnace which includes a main chamber and a circulation well connected to the main chamber by a communication passageway. There is also a vortex well having a periphery, a top and bottom exit outlet for recovering molten metal therefrom, and a cover isemplaced over the vortex well. The furnace also includes an inert gas bubble actuated molten metal pump having an entry port in the circulation well and an exit port tangentially arranged with respect to the periphery of said vortex well at or near the top of the vortex well. There is also an inert gas atmosphere positioned in the vortex well beneath the cover.

Also encompassed by the present invention is a metal melting furnace which includes a main chamber and a circulation well containing molten metal having a surface level connected to the main chamber by a communication passageway. There is a vortex well having a periphery, a top and an exit outlet for recovering molten metal therefrom, and a cover is emplaced over the vortex well. The furnace also includes an includes a sensor for measuring the surface level of the molten metal in the circulation well and a means for vertically positioning the cover to a position selected based on the measured surface level of the molten metal.

Also encompassed by the present invention is a metal-melting furnace which includes a main chamber and a circulation well connected to the main chamber by a communication passageway. There is also a well block having, a vortex well, said vortex well having a periphery, top and an exit outlet for recovering molten metal therefrom. A cover is emplaced over the vortex well, wherein said cover has a periphery positioned in inward spaced relation to the well block to form a peripheral gas release space between said cover and the well block. The furnace also includes an inert gas bubble actuated molten metal pump having an entry port in the circulation well and an exit port tangentially arranged with respect to the periphery of said vortex well at or near the top of the vortex well. An inert gas and volatile hydrocarbon gas atmosphere is positioned in the charge well beneath the cover, and this atmosphere isreleasable through said peripheral gas release space.

Also encompassed by the present invention is a metal-melting furnace which includes a main chamber and a circulation well connected to the main chamber by a communication passageway. There is also a vortex well containing a molten metal vortex and having a periphery, a top and an exit outlet for recovering molten metal therefrom and a cover is emplaced over the vortex well adjacent the surface of the molten metal vortex. The furnace also includes an inert gas bubble actuated molten metal pump having an entry port in the circulation well and an exit port tangentially arranged with respect to the periphery of said vortex well at or near the top of the vortex well. An inert gas atmosphere is also positioned in the vortex well beneath the cover.

Also encompassed by the present invention is a metal-melting furnace which includes a main chamber and a circulation well connected to the main chamber by a communication passageway. There is also a vortex well having a periphery, a top and an exit outlet for recovering molten metal therefrom and a cover emplaced over the vortex. well. A feed tube extends through said cover to enable metal chips to be tangentially added to the vortex well adjacent the periphery of said vortex well. The furnace also includes an inert gas bubble actuated molten metal pump having an entry port in the circulation well and an exit port tangentially arranged with respect to the periphery of said vortex well at or near the top of the vortex well. An inert gas atmosphere is also positioned in the vortex well beneath the cover.

Also encompassed by the present invention is a metal-melting furnace which includes a main chamber and a circulation well connected to the main chamber by a communication passageway. The furnace also includes a vortex well having a periphery, a top and an exit outlet for recovering molten metal therefrom and said vortex well is positioned in a vortex well block. A cover is also emplaced over the vortex well. There is also an inert gas bubble actuated molten metal pump having an entry port in the circulation well and an exit port tangentially arranged with respect to the periphery of said vortex well at or near the top of the vortex well. An inert gas atmosphere positioned in the vortex well beneath the cover. An end block is also positioned in adjoining relation to the vortex well block.

These blocks are connected by a projection extruding from one block which engages a recess in the other block. The circulation well is contained in said adjoining blocks.

The present invention is further described by means of the accompanying drawing in which:

Fig.1 is a vertical cross-sectional view of a molten metal pump and furnace for use therewith which comprises a preferred embodiment of the present invention;

Fig. 2 is a cut away perspective view of the main molten metal chamber, circulation wall, vortex well and adjacent chamber of the molten metal pump and furnace in Fig. 1;

Fig. 3 is a cross-sectional through 3-3 in Fig. 2;

Fig. 4 is a partial end view of the molten metal pump and furnace shown in Fig.1 from 4-4;

Fig. 5 is a cross-sectional view through 5-5 in Fig. 1;

Fig. 6 is an end view from 6-6 of the molten metal pump and furnace shown in Fig. 1;

Fig. 7 is a detailed view of area 7 in Fig. 1;

Fig. 8 is a cross sectional view through 8-8 in Fig. 1;

Fig. 9 is a partial top view of the well block and end block from 9-9 in Fig. 1;

Fig. 10 is a vertical cross-sectional view similar to Fig. 1 in which the feed tube and vortex well cover are in their elevated positions;

Fig. 11 is a detailed view similar to Fig. 7 in which the feed tube and vortex well cover are in intermediate elevated position still covering the vortex well; and

Fig. 12 is a top plan view of the vortex well lock and part of the end block from 12-12 in Fig.11 in which an alternate vortex well cover is shown.

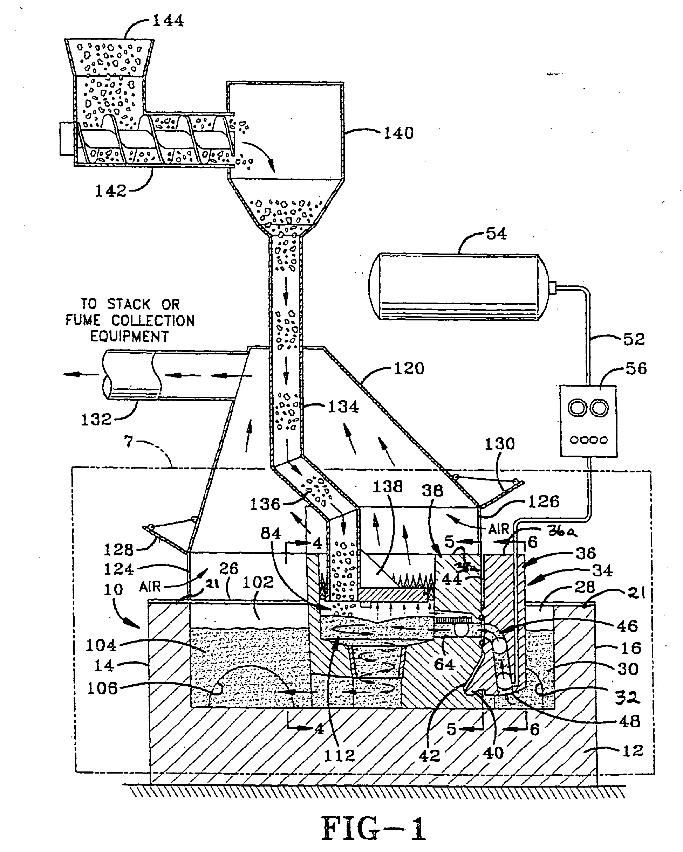

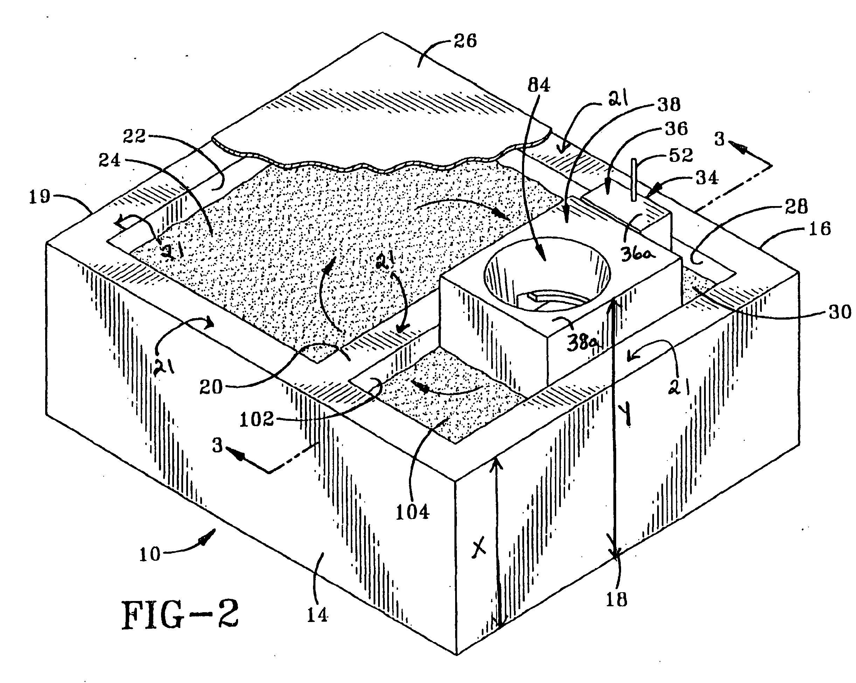

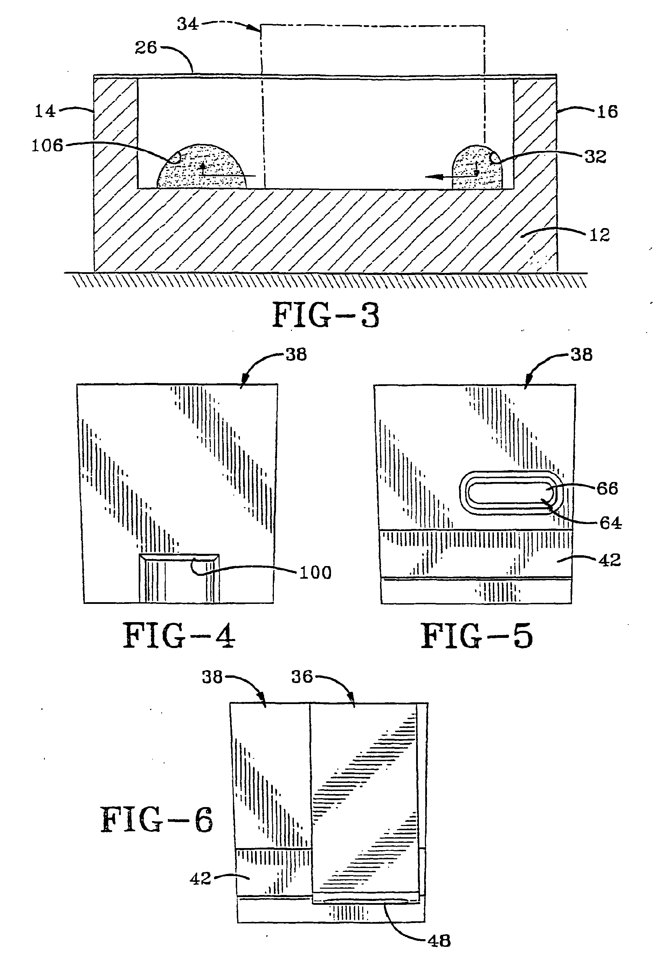

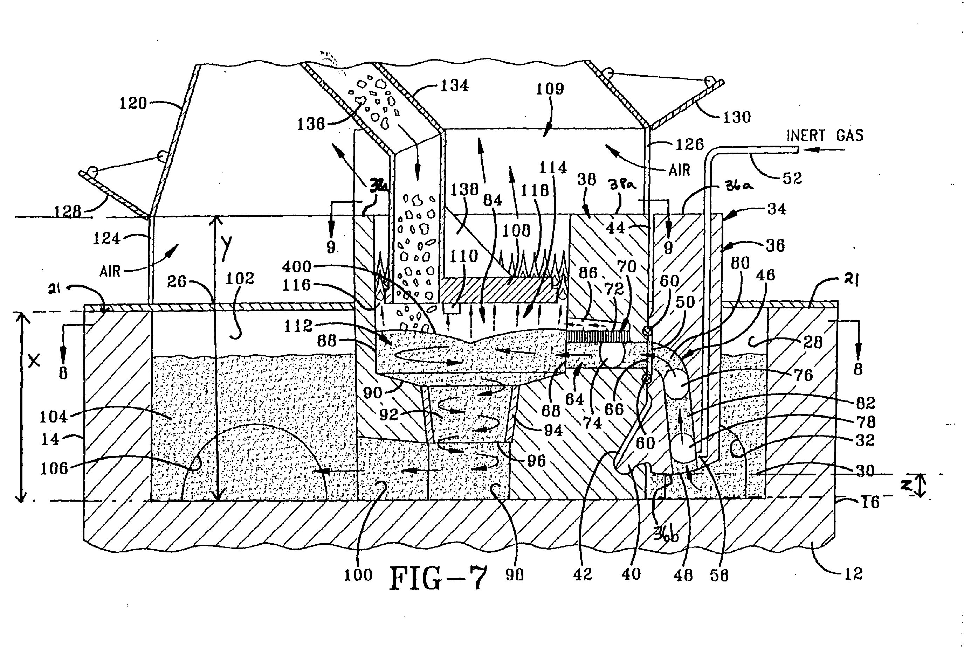

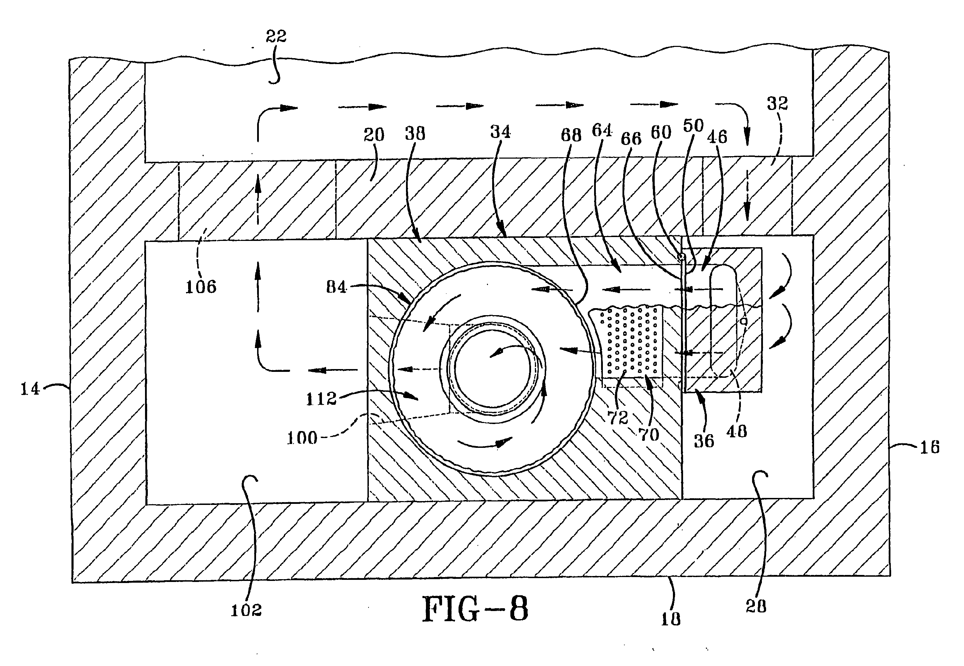

Referring to Figs. 1-9, the furnace is shown generally at 10 has a bottom wall 12, side walls 14 and 16, front wall 18 and a rear wall 19. The furnace 10 also has an intermediate transverse wall 20 which defines along with the rear wall a main chamber 22. Side walls 14, 16, front wall 18, rear wall 19 and transverse wall 20 all extend upwardly from bottom wall 12 and terminate at an upper edge 21. Upper edge 21 lies a first height "X" above bottom wall 12 (Fig. 7). As is conventional fossil fuel burners (not shown) are used to maintain a molten metal bath 24 in this main chamber. The main chamber 22 also has a cover shown in fragment at numeral 26. Adjacent the main chamber 22 is a circulation chamber 28 also having a molten metal bath 30 which is connected to the main chamber 22 by means of communicating passageway 32. The molten metal may be aluminum, magnesium, zinc, copper, brass or steel. Adjacent the circulation chamber 28 there is a molten metal pump shown generally at 34 which includes an end block 36. Adjacent the end block 36 there is well block 38. Preferably the well block 38 is a separate and replaceable block of refractory material. It would alternatively be possible to integrate the end block 36 and well block 38 into a single unit. End block 36 and well block 38 have upper edges 36a and 38a which lie a second height "Y" above bottom wall 12 of furnace 10 (Fig. 7). Second height "Y" is greater than first height "X" so that the upper edges 36a, 38a of end block 36 and well block 38 extend vertically above upper edge 21 of side, front and rear walls 14,16,18,19 relative to bottom wall 12.

In accordance with one of the features of the present invention, in end block 36 there is formed an end block projection 40 which engages in recess 42 on the well block 38. Between the end block 36 and well block 38 there is also a vertical space 44. As may be seen in Fig. 7, in the end block 36 there is also a vertical passageway 46 which has a lower opening 48 and a medial outlet 50. End block, 36 is supported by well block 38 so that opening 48 lies at a height "Z" above bottom wall 12 of furnace 10 (Fig. 7). Molten metal from molten metal bath 30 is drawn into opening 48 from the area between lower end 36b of end block 36 and bottom wall 12 of furnace 10. There is also an inert gas line 52 which extends from a tank 54 containing nitrogen, argon or other inert gas, to controls 56 and then to inert gas outlet 58 into passageway 46. Adjacent the medial outlet 50 of the vertical passageway 46 there are seals 60 and 62 at which point the vertical passageway 46 connects to horizontal passageway 64 in the well block 38. This horizontal passageway 64 has an opening 66 and an outlet 68 adjacent a plate 70 with a plurality of apertures as at aperture 72. As is conventional in a molten metal pump, such as in molten metal pump 34 there are a plurality of inert gas bubbles 74, 76 and 78 in the vertical passageway 46 and horizontal passageway 64 which rise to move molten metal masses as at 80 and 82 from the circulation chamber 28 to the vortex well shown generally at 84. Above the plate 70 there is an inert gas collection recess 86 in the well block 38. The vortex well 84 has an upper region 88, medial region 90 and a lower region 92 with a surrounding liner 94. At the bottom of the lower region 92 there is a lower outlet 96 which communicates with a bottom recess 98 in the well block 38. A horizontal passageway 100 extends through to intermediate well 102. In this intermediate well 102 there is another molten metal bath 104 which re-circulates back to the main chamber 22 by means of communicating passageway 106. Above the vortex well 84 there is a refractory cover 108. Other suitable vortex well containment means such as an upward extension of the vortex well shown generally as numeral 109 in Fig. 7 may be substituted for the cover 108. The cover 108 will be equipped with a sensor 110 which overlies a molten metal vortex 112 in the vortex well 84. The sensor 110 senses the surface level 109 of the molten metal vortex 112 to enable the cover 108 to be raised or lowered as is described hereafter. Between the cover 108 and the molten metal vortex 112 there is an inert gas atmosphere or blanket 114 which is continuously or intermittently replenished with inert gas from inert gas bubbles in the pump 34 which enter recess 86 through apertures as at aperture 72 in plate 70. Between the cover 108 and the well block 38 there is a peripheral space 116 which allows for the formation of a combustion zone 118 for allowing oils, paints, lacquers as well as other volatile hydrocarbons to exit from below the cover 108 and be burned off. It will be appreciated that this peripheral space 116 will also allow the escape of inert gas from the inert gas atmosphere or blanket 114 as additional inert gases are added to this space. The well cover 108 will have sufficient space around its periphery to allow oil, paints, lacquer or nitrogen, as well as any other volatile hydrocarbons, which have been carried into the molten metal stream on the scrap charge material, to exit from below cover 108. This heat resistant cover108 would be adjustable in height, but would normally provide several inches of clearance above the surface of the molten metal bath for the containment of the replenishing supply of inert gas. As seen in Fig. 1, above combustion zone 118 there is a smoke collection hood 120 with air intakes 124 and 126 having respectively closure doors 128 and 130. From the smoke collection hood 120 there is a line 132 to a stack or particle collection equipment (not shown). Extending downwardly through the smoke collection hood 102 there is a scrap feed tube 134 in which scrap as in metal chips 136 are feed into the molten metal vortex 112 in the vortex well 84. It will be appreciated that metal scrap may be substituted for metal chips and, for the purposes of this disclosure the term "metal chips" should be understood to include both metal chips and metal scrap. The metal chips 136 are preferably fed tangentially into the molten metal vortex 112 adjacent the periphery of the vortex well 84. The feed tube 134 is attached to the cover 108 by means of a flange 138. At its upper end feed tube 134 receives metal chips from a hopper 140 which is in turn fed by a screw conveyor 142 which receives metal chips 136 from a feed opening 144.

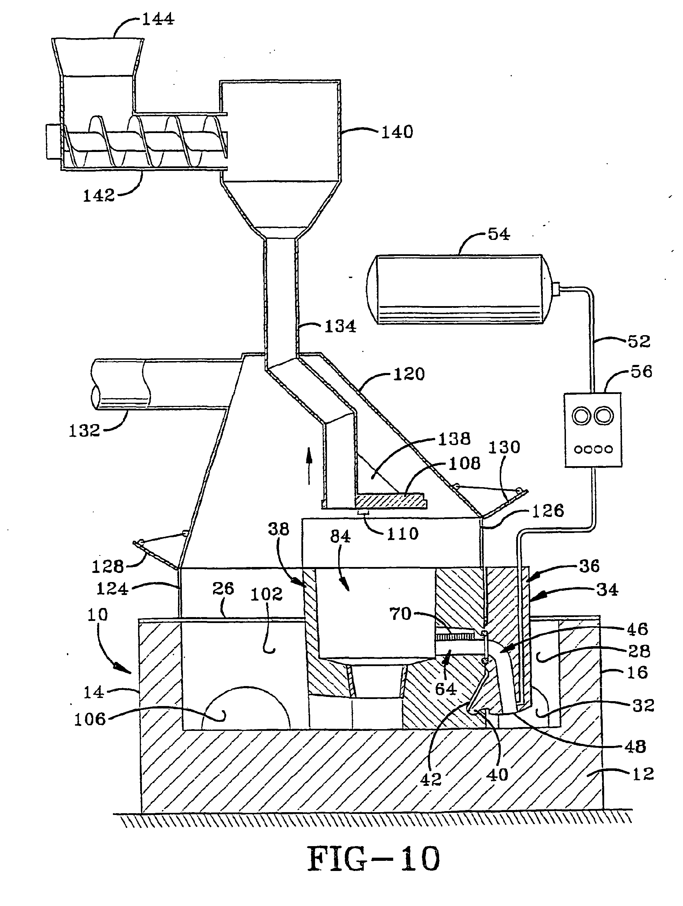

Referring to Fig. 10, it will be seen that the feed tube 134 and cover108 may be withdrawn upwardly from the vortex well 84 by well known conventional means.

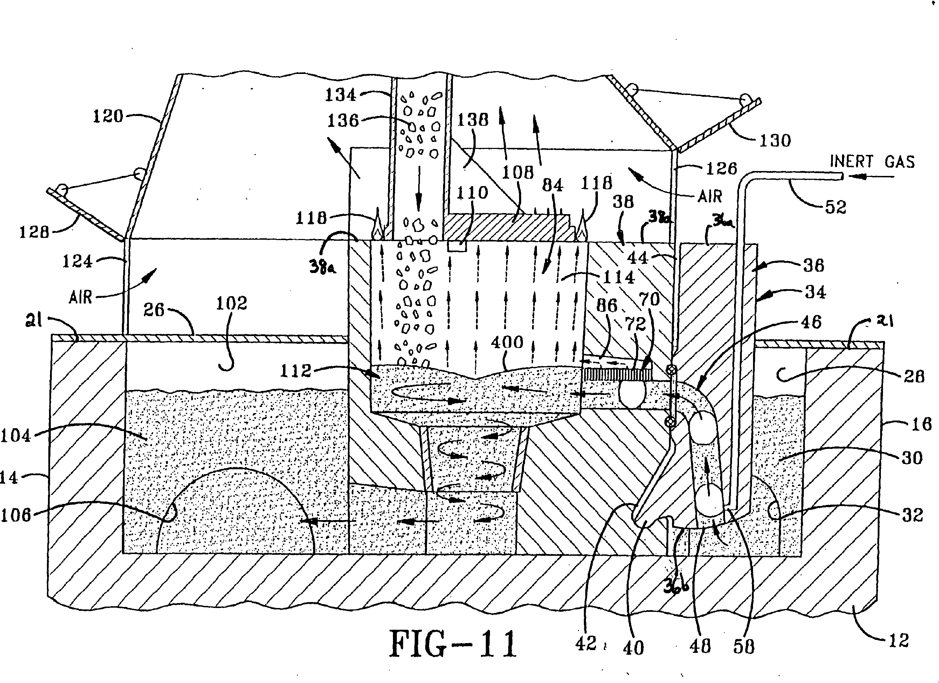

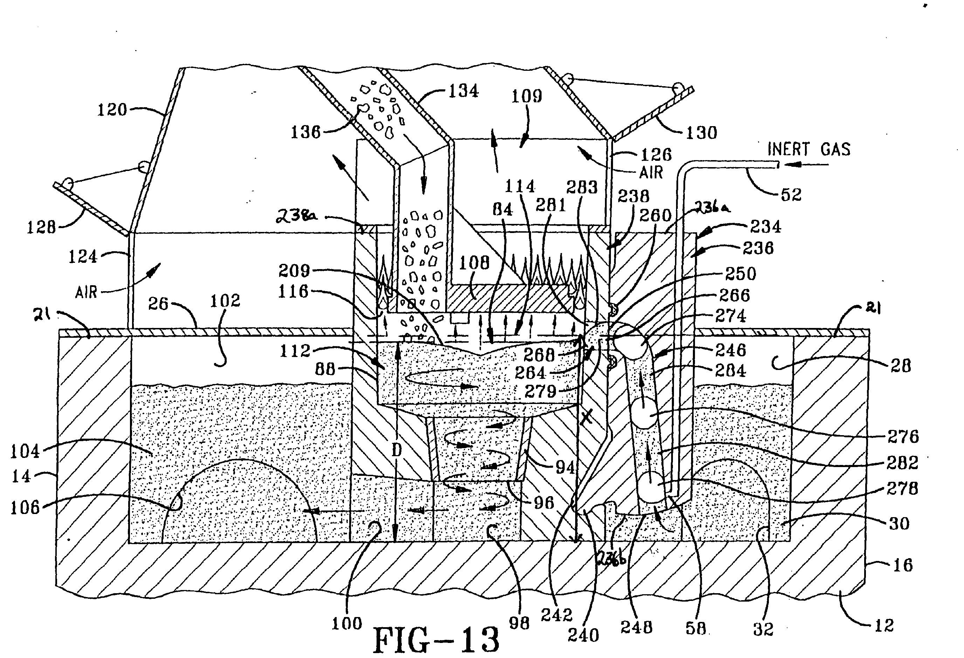

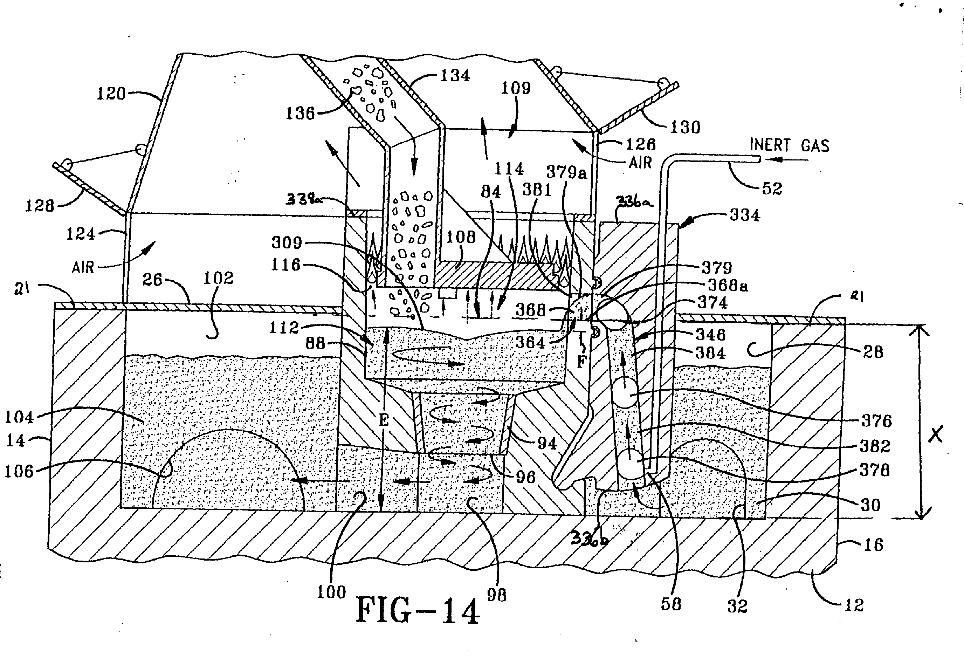

Referring to Fig. 11, it will be seen that the feed tube 134 may also be adjusted in height so that the cover 108 at the top of the vortex well 84. The height of the inert gas blanket 114 is thereby may be adjusted. The vertical position of the cover 108 is preferably selected with reference to the surface level of the molten metal in the vortex well 84 which is measured by sensor 110.

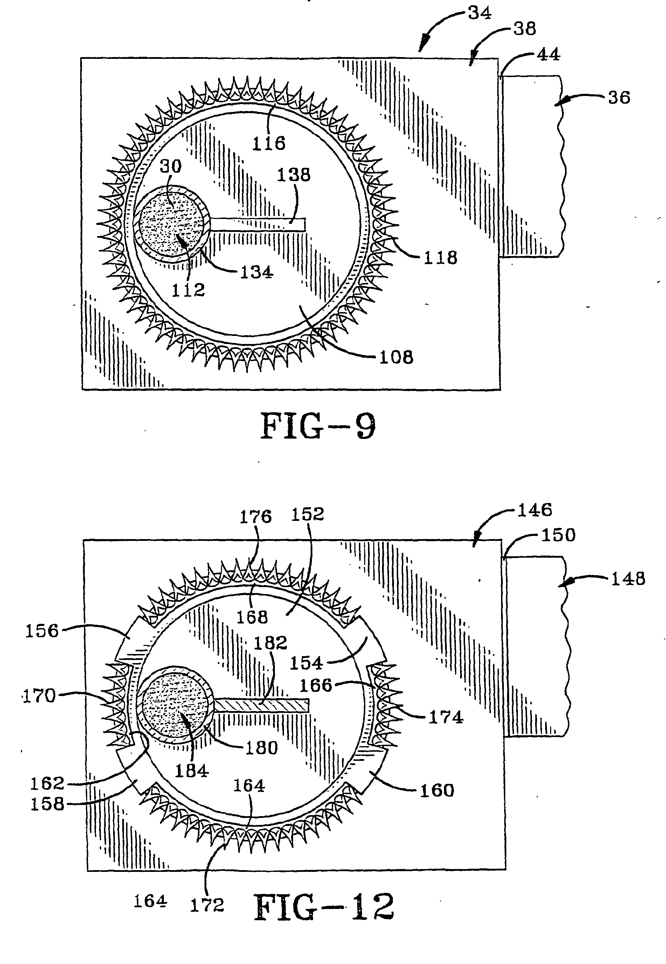

Referring to Fig. 12, an alternate embodiment of the cover is shown. In this embodiment a well block 146 is shown as well as the end block 148 in fragment. A vertical space 150 is interposed between the well block 146 and end block 148. An alternate cover 152 is positioned on the top of the well block 146 by means of radial peripheral supports 154,156, 158 and 160. Between the cover 158 and the well block 148 there are peripheral spaces 162,164, 166 and 168 and positioned above these peripheral spaces there are respectively combustion zones 170,172, 174 and 176. A feed tube 180 connected to the cover 152 by means of a bracket 182 allows metal chips to be fed into the molten metal vortex 184.

In the operation of the molten metal pump and furnace of the present invention metal chips are fed into the feed opening 144 of conveyor 132 which transports these metal chips to hopper 140 from which they descend into the feed tube 134 to vortex well 84 where they are added to the molten metal vortex 112.
At the same time nitrogen or other inert gas was drawn from tank 54 through line 52 and controls 56 to form bubbles as at bubble 48 in the vertical passageway 46 of molten metal pump 34. These inert air bubbles move molten metal masses as at mass 64 from molten metal bath 30 in the circulation chamber 20 to molten metal vortex 112 in vortex well 84. When these bubbles as in bubble 74 enter the horizontal passageway 64 of the molten metal pump 34 they pass through apertures as at aperture 72 in plate 70 to enter recess 86 and thereafter enter vortex well 84 between the molten metal vortex 112 and the cover 108 to form the inert gas atmosphere or blanket 114. Alternatively the inert gas blanket may be contained by upwardly extended walls of the vortex well 84. It will thus be understood that such containment means may be either a cover as at cover 108 or by extended walls of the vortex well 84. This inert gas blanket 114 reduces the formation of oxidation on the metal chips entering the molten metal vortex 112. Oil, paints, lacquers and other volatile hydrocarbons which may be present within the metal chips are volatised and passed through the peripheral space 116 between the cover 108 and the well block 38 to be burned in the combustion zone 176. The metal chips flow along with the rest of the molten metal vortex 116 in a swirling downward path to outlet 96 and bottom recess 90 where the direction of the molten metal is changed to a lateral flow path through horizontal passageway 100 into intermediate well 102. From intermediate well 102 molten metal in molten metal bath 104 goes through passageway 106 to main chamber 22. After heating in main chamber 22 molten metal passes through passageway 32 into circulation chamber 38. From the molten metal bath 30 in circulation chamber 28 the molten metal is again pumped through molten metal pump 34 back to vortex well84 where additional metal chips are again added under inert gas blanket 114 in the same way. It will be understood that it would alternately be possible to remove molten metal from the passageway 32 adjacent circulation chamber 28 to the vortex well. For the purposes of this disclosure, the removal of molten metal from the circulation chamber to the vortex well will be considered to also include the embodiment of removing molten metal from the adjacent passageway.

It will be appreciated that a molten metal pump and furnace for use therewith and a method for its operation has been described in which oxidation of metal chips entering molten metal vortex is substantially reduced.

It will also be appreciated that the present invention allows for the combination of the functions of circulating molten metal in a fossil fuel reverberatory furnace and submerging metal chips in an open side well chamber to cause the melted feed stock to be rapidly circulated back into the main chamber of the furnace. Any resulting loss in temperature due to the introduction of the cold scrap, can quickly be recovered in the presence of the combustion burners located in the enclosed main chamber of the furnace.

It will also be appreciated that the present invention also lends itself to melting materials such as undelacquered UBC (used beverage cans) with substantially improved melt yield, without requiring the prior step of delacquering the UBC in advance of this melting process.

In the foregoing description, certain terms have been used for brevity, clearness, and understanding. No unnecessary limitations are to be implied therefrom beyond the requirement of the prior art because such terms are used for descriptive purposes and are intended to be broadly construed.

Moreover, the description and illustration of the invention is an example and the invention is not limited to the exact details shown or described, but rather defined by the scope of the appended claims.

## Claims

1. A metal-melting furnace comprising:
a main chamber (22);
a circulation chamber (28) in operative communication with the main chamber;
a vortex well (84) adapted to hold a maximum quantity of molten metal therein, the vortex well having a periphery, a top, and an exit outlet (96) for recovering molten metal therefrom,
a containment means (108) emplaced over the vortex well (84); and
a gas bubble actuated molten metal pump (48);
**characterised in that**
a well block (38) is disposed within the circulation chamber (28);
the vortex well (84) is formed within the well block; and
the pump (48) is contained within an end block (36); said end block engaging the well block (38) and having an entry port in operative communication with the circulation chamber (28) and an exit port (64) in operative communication with the vortex well (84), the exit port being tangentially arranged with respect to the periphery of said vortex well.

2. The metal-melting furnace of claim 1, wherein the end block (36) is disposed within the circulation chamber (28) adjacent the well block (38).

3. The metal-melting furnace of claim 2, wherein the well block (38) is provided with a recess (42) and the end block (36) is provided with a complementary sized and shaped projection (40), and wherein the recess and projection engage each other.

4. The metal-melting furnace of claim 3, further including a vertical passageway (46) formed between the engaged well block (38) and the end block (36).

5. The metal-melting furnace of claim 4, further comprising at least one seal disposed in the vertical passageway (46) between the well block (38) and the end block (36), the seal preventing the molten metal flowing from the metal pump (48) into the vortex well (84) from leaking into the vertical passageway.

6. The metal-melting furnace of claim 5, further comprising a ridge formed on one of the well block (38) and the end block (36), the ridge being disposed outwardly form the at least one seal to retain the seal in position in the vertical passageway.

7. The metal-melting furnace of claim 3, wherein a gap is formed between the projection (40) on the end block (36) and the well block (38) when the end block is engaged with the well block.

8. The metal-melting furnace of claim 3, wherein the end block (36) has a bottom surface and the circulation chamber (28) has a bottom and the end block (36) engages and supports the well block (38) so that the bottom surface of the end block is disposed a spaced distance (Z) above the bottom of the circulation chamber.

9. The metal-melting furnace of claim 8, wherein the end block (36) includes an entry port (48) in its bottom surface and molten metal enters the pump through the entry port in the bottom surface.

10. The metal-melting furnace of claim 9, wherein the well block (38) has an upper surface (38a) and the end block (36) has an upper edge (36a) and the upper surface and upper edge are substantially coplanar when the well block (38) and end block (36) are engaged with each other.

11. The metal-melting furnace of claim 1, wherein the containment means is a cover (108).

12. The metal-melting furnace of any preceding claim, further comprising a continuously or intermittently replenished inert gas atmosphere (114) positioned over the vortex well (84) and beneath the containment means (108).

## Patentansprüche

1. Metallschmelzofen umfassend:
eine Hauptkammer (22);
eine Zirkulationskammer (28) in Wirkverbindung mit der Hauptkammer;
einen Wirbelschacht (84), der ausgelegt ist, darin eine maximale Menge von geschmolzenem Metall aufzunehmen, wobei der Wirbelschacht einen Umfang, einen Deckel und einen Auslass (96) aufweist, um daraus geschmolzenes Metall zu gewinnen;
Abschirmmittel (108), die über dem Wirbelschacht (84) angeordnet sind; und
eine mit Gasblasen wirkende Metallschmelzenpumpe (48);
**dadurch gekennzeichnet, dass**
ein Schachtblock (38) in der Zirkulationskammer (28) angeordnet ist;
der Wirbelschacht (84) in dem Schachtblock ausgebildet ist; und
die Pumpe (48) in einem Endblock aufgenommen ist (36); wobei der Endblock mit dem Schachtblock (38) in Eingriff steht und eine Eingangsöffnung in Wirkverbindung mit der Zirkulationskammer (28) und eine Ausgangsöffnung (64) in Wirkverbindung mit dem Wirbelschacht (84) aufweist, wobei die Ausgangsöffnung bezogen auf den Umfang des Wirbelschachts tangential angeordnet ist.

2. Metallschmelzofen nach Anspruch 1, bei dem der Endblock (36) in der Zirkulationskammer (28) in der Nähe des Schachtblocks (38) angeordnet ist.

3. Metallschmelzofen nach Anspruch 2, bei dem der Schachtblock (38) mit einer Vertiefung (42) und der Endblock (36) mit einem hinsichtlich Größe und Form komplementären Vorsprung (40) versehen sind und bei dem die Vertiefung und der Vorsprung miteinander in Eingriff stehen.

4. Metallschmelzofen nach Anspruch 3, des Weiteren umfassend einen vertikalen Kanal (46), der zwischen den in Eingriff stehenden Schachtblock (38) und Endblock (36) ausgebildet ist.

5. Metallschmelzofen nach Anspruch 4, des Weiteren umfassend wenigstens eine Dichtung, die in dem vertikalen Kanal (46) zwischen dem Schachtblock (38) und dem Endblock (36) angeordnet ist, wobei die Dichtung verhindert, dass geschmolzenes Metall, das von der Metallpumpe (48) in den Wirbelschacht (84) fließt, in den vertikalen Kanal läuft.

6. Metallschmelzofen nach Anspruch 5, des Weiteren umfassend eine Erhöhung, die an dem Schachtblock (38) oder dem Endblock (36) angeformt ist, wobei die Erhöhung außen an der wenigstens einen Dichtung angebracht ist, um die Dichtung in dem vertikalen Kanal zu halten.

7. Metallschmelzofen nach Anspruch 3, bei dem ein Spalt zwischen dem Vorsprung (40) an dem Endblock (36) und dem Schachtblock (38) ausgebildet ist, wenn der Endblock mit dem Schachtblock in Eingriff steht.

8. Metallschmelzofen nach Anspruch 3, bei dem der Endblock (36) eine Bodenfläche und die Zirkulationskammer (28) einen Boden aufweisen und der Endblock (36) mit dem Schachtblock (38) in Eingriff steht und diesen hält, so dass die Bodenfläche des Endblocks mit einem Abstand (Z) über dem Boden der Zirkulationskammer angeordnet ist.

9. Metallschmelzofen nach Anspruch 8, bei dem der Endblock (36) eine Eingangsöffnung (48) in dessen Bodenfläche umfasst und bei dem das geschmolzene Metall durch die Eingangsöffnung in der Bodenfläche in die Pumpe gelangt.

10. Metallschmelzofen nach Anspruch 9, bei dem der Schachtblock (38) eine obere Fläche (38a) und der Endblock (36) eine obere Kante (36a) aufweisen und bei dem die obere Fläche und die obere Kante im Wesentlichen in einer Ebene liegen, wenn der Schachtblock (38) und der Endblock (36) miteinander in Eingriff stehen.

11. Metallschmelzofen nach Anspruch 1, bei dem die Abschirmmittel ein Deckel (108) sind.

12. Metallschmelzofen nach einem der vorstehenden Ansprüche, des Weiteren umfassend eine kontinuierlich oder mit Unterbrechungen wieder aufgefüllte Inertgasatmosphäre (114), die über dem Schachtblock (84) und unterhalb der Abschirmmittel (108) angeordnet ist.

## Revendications

1. Four de métallurgie comprenant :
une chambre principale (22) ;
une chambre de circulation (28) en communication fonctionnelle avec la chambre principale ;
un puits-tourbillon (84) agencé pour contenir une quantité maximale de métal en fusion, le puits-tourbillon présentant une périphérie, un haut, et une sortie (96) pour en récupérer le métal en fusion,
un moyen de confinement (108) placé sur le puits-tourbillon (84) ; et
une pompe à métal en fusion (48) actionnée par des bulles de gaz ;
**caractérisé en ce que**
un bloc-puits (38) est disposé dans la chambre de circulation (28) ;
le puits-tourbillon (84) est formé dans le bloc-puits ; et
la pompe (48) est contenue dans un bloc d'extrémité (36) ; ledit bloc d'extrémité étant au contact du bloc-puits (38) et comportant un orifice d'entrée en communication fonctionnelle avec la chambre de circulation (28) et un orifice de sortie (64) en communication fonctionnelle avec le puits-tourbillon (84), l'orifice de sortie étant situé de manière tangentielle par rapport à la périphérie dudit puits-tourbillon.

2. Four de métallurgie selon la revendication 1, dans lequel le bloc d'extrémité (36) est disposé dans la chambre de circulation (28) adjacente au bloc-puits (38) .

3. Four de métallurgie selon la revendication 2, dans lequel le bloc-puits (38) est pourvu d'un évidement (42) et le bloc d'extrémité (36) comporte un appendice de taille et de forme complémentaires (40), et dans lequel l'évidement et l'appendice sont en contact mutuel.

4. Four de métallurgie selon la revendication 3, comprenant en outre un passage vertical (46) formé entre le bloc-puits en contact (38) et le bloc d'extrémité (36).

5. Four de métallurgie selon la revendication 4, comprenant en outre au moins un joint disposé dans le passage vertical (46) entre le bloc-puits (38) et le bloc d'extrémité (36), le joint empêchant le métal en fusion s'écoulant depuis la pompe métallique (48) dans le puits-tourbillon (84) de fuir dans le passage vertical.

6. Four de métallurgie selon la revendication 5, comprenant en outre une arête formée sur l'un parmi le bloc-puits (38) et le bloc d'extrémité (36), l'arête étant disposée vers l'extérieur depuis le au moins un joint pour maintenir le joint en position dans le passage vertical.

7. Four de métallurgie selon la revendication 3, dans lequel un espace est formé entre l'appendice (40) sur le bloc d'extrémité (36) et le bloc-puits (38) lorsque le bloc d'extrémité est au contact du bloc-puits.

8. Four de métallurgie selon la revendication 3, dans lequel le bloc d'extrémité (36) comporte une surface inférieure et la chambre de circulation (28) comporte un fond et le bloc d'extrémité (36) est au contact du bloc-puits (38) et le supporte, de sorte que la surface inférieure du bloc d'extrémité soit disposée à une distance espacée (Z) au-dessus du fond de la chambre de circulation.

9. Four de métallurgie selon la revendication 8, dans lequel le bloc d'extrémité (36) comprend un orifice d'entrée (48) dans sa surface inférieure et le métal en fusion entre dans la pompe par l'orifice d'entrée dans la surface inférieure.

10. Four de métallurgie selon la revendication 9, dans lequel le bloc-puits (38) comporte une surface supérieure (38a) et le bloc d'extrémité (36) comporte un bord supérieur (36a) et la surface supérieure et le bord supérieur sont sensiblement coplanaires lorsque le bloc-puits (38) et le bloc d'extrémité (36) sont en contact mutuel.

11. Four de métallurgie selon la revendication 1, dans lequel le moyen de confinement est un couvercle (108).

12. Four de métallurgie selon l'une quelconque des revendications précédentes, comprenant en outre une atmosphère de gaz inerte (114) réapprovisionnée en continu ou par intermittence et située sur le puits-tourbillon (84) et sous le moyen de confinement (108).
